# FASCICULE DE BREVET EUROPEEN

(11) **EP 0 771 060 B1**
(45) Date de publication et mention de la délivrance du brevet: **08.03.2000**
(21) Numéro de dépôt: 96402251.1
(22) Date de dépôt: 23.10.1996
(51) Int. Cl.: H02K 9/06, F04D 29/28, F04D 25/08

(54) **Alternateur pourvu de moyens de ventilation interne perfectionnés**
Mit verbesserter, interner Lüftungsvorrichtung versehene Lichtmaschine
Alternator featuring improved internal ventilation means

(30) Priorité: 24.10.1995 FR 9512504
(43) Date de publication de la demande: 02.05.1997
(73) Titulaire: VALEO EQUIPEMENTS ELECTRIQUES MOTEUR, 94000 Créteil (FR)
(72) Inventeur: Persyn, Jean-Marie, 77000 Meulun (FR); Cazal, Christian, 91280 Saint Pierre du Perray (FR)
(74) Mandataire: Le Forestier, Eric

(56) Documents cités:
- EP-A- 0 418 027
- FR-A- 2 685 572
- US-A- 4 184 804
- PATENT ABSTRACTS OF JAPAN vol. 5, no. 117 (E-067), 28 Juillet 1981 & JP-A-56 056146 (NIPPON DENSO), 18 Mai 1981,

## Description

La présente invention concerne d'une façon générale les alternateurs de véhicules automobiles, et plus particulièrement un perfectionnement à un alternateur dit à ventilation interne, c'est-à-dire comportant deux ventilateurs situés de part et d'autre du rotor de l'alternateur, à l'intérieur du carter de celui-ci.

Lors de la rotation de l'alternateur, les ventilateurs provoquent la circulation d'un flux d'air de refroidissement important à l'intérieur de celui-ci, via des ouies ménagées dans le carter.

Classiquement, ces ventilateurs sont réalisés par découpage et pliage de tôle d'acier et sont rapportés, par exemple par soudage ou sertissage, sur les flancs des roues polaires du rotor ou sur le corps de bobine de ce même rotor.

Dans la technique connue, les pales de ces ventilateurs sont plates, avec un profil transversal généralement parallèle à l'axe de rotation de l'alternateur, et inclinées par rapport à des plans radiaux, l'entrée d'air s'effectuant axialement et la sortie d'air s'effectuant radialement.

De tels ventilateurs pour alternateurs sont par exemple connus du document FR-A-2 685 572.

Ces ventilateurs connus présentent toutefois un inconvénient suivant lequel, par le fait d'une différence de pression entre l'entrée d'air et la sortie d'air due à la présence d'obstacles sur les trajets, ils n'empêchent pas une certaine quantité d'air de reboucler vers l'entrée d'air, avec des turbulences engendrées par un décollement du flux d'air des pales.

Il en résulte une ventilation qui n'est pas optimale, ainsi qu'un fonctionnement bruyant.

La présente invention vise à pallier ces inconvénients de l'état de la technique, et de proposer un nouveau ventilateur capable de diminuer la quantité d'air susceptible, après être entrée dans le ventilateur, de se rediriger vers l'entrée d'air et donc de ne pas participer au refroidissement.

L'invention propose à cet effet un alternateur, du type comprenant un carter formant stator, un rotor monté sur un arbre tournant dans le carter, au moins un ventilateur monté sur le rotor à l'intérieur du carter, tournant avec ledit rotor et comportant une pluralité de pales de profil transversal généralement parallèle à l'axe de rotation du ventilateur, ainsi qu'une pluralité d'ouies de ventilation, comprenant des ouies d'entrée axiale d'air et des ouies de sortie radiale d'air, alternateur caractérisé en ce que lesdites pales présentent chacune en outre une partie terminale dirigée vers l'intérieur pour ainsi présenter en conjonction avec le flanc du rotor un profil transversal en forme générale de "U".

Des aspects préférés, mais non limitatifs, de l'alternateur selon l'invention sont les suivants :
- lesdites parties terminales sont orientées à environ 90° par rapport aux pales.
- chaque pale présente un profil longitudinal droit.
- le ou chaque ventilateur muni de ses parties terminales est réalisé par découpage et pliage de tôle, le profil transversal en forme générale de "U" de chaque pale étant défini en conjonction avec un flasque du ventilateur.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
la figure 1 est une vue en coupe axiale d'un alternateur selon la présente invention,
la figure 2 est une vue en plan d'un premier ventilateur de l'alternateur de la figure 1,
la figure 3 est une vue en section selon la ligne III de la figure 2,
la figure 4 est une vue en plan d'un second ventilateur de l'alternateur de la figure 1, et
la figure 5 est une vue en section selon la ligne V de la figure 4.

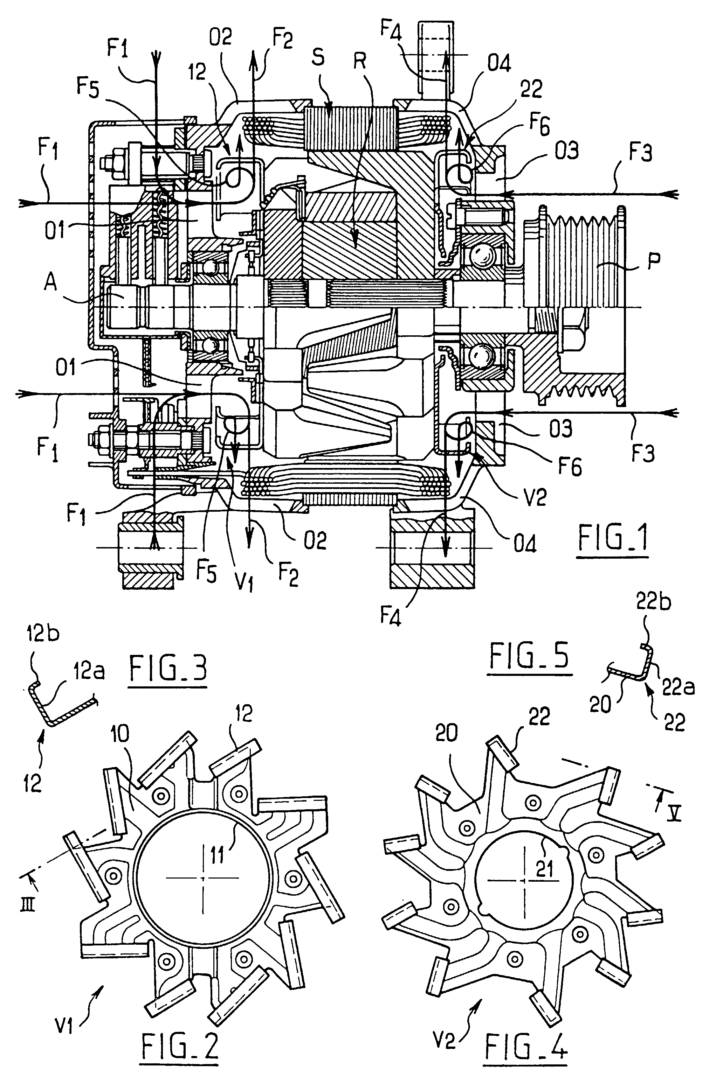

En référence tout d'abord à la figure 1, on a illustré un alternateur de conception générale classique, comprenant un carter définissant un stator S, un arbre A monté rotatif dans le carter C et portant un rotor R, et une poulie extérieure P.

Deux ventilateurs V1 et V2 sont fixés de part et d'autre du rotor R de manière à tourner avec lui. En association avec le ventilateur arrière V1 (côté opposé à la poulie) sont formées dans le carter, dans une paroi d'extrémité de celui-ci orientée radialement, une pluralité d'ouies O1 d'entrée d'air et, dans la paroi circonférentielle du carter, une pluralité d'ouies O2 de sortie d'air. De même, au ventilateur avant V2 sont associées des ouies O3 d'entrée d'air dans la paroi radiale opposée du carter, et des ouies O4 de sortie d'air dans la paroi cinconférentielle du carter, à distance des ouies O2.

Les trajets d'air au niveau des deux ventilateurs sont schématisés par des flèches F1-F4 correspondant respectivement aux ouies O1-O4.

Les figures 2 et 3 illustrent en détail le ventilateur arrière V1. Il est fabriqué, de façon classique en soi, par découpage et pliage de tôle et comporte un flasque 10 dans lequel est ménagé une ouverture circulaire 11 pour le passage de l'arbre A et des conducteurs de rotor. Il comporte également une pluralité de pales périphériques 12 s'étendant dans des directions générales inclinées par rapport aux directions radiales.

Comme le montre la figure 3, chaque pale 12 comprend une partie plane 12a s'étendant dans un plan parallèle à l'axe de rotation à partir du flasque 11, et le long de son bord opposé, une partie terminale 12b repliée à environ 90° vers l'intérieur. On notera en outre que le ventilateur V1 possède, dans le flasque mais à proximité de la partie principale 12a de la pale.

Le ventilateur avant V2 représenté sur les figures 4 et 5 est semblable au ventilateur arrière, et est réalisé par la même technique de fabrication. Il comprend un flasque 20 dans lequel est formée une ouverture 21 pour l'arbre A et pour un capot de roulement avant. Les pales sont indiquées en 22 et possèdent chacune une partie plane 22a et une partie terminale 22b repliée vers l'intérieur à environ 90°.

De façon préférée, les parties terminales 12b, 22b présentent la même longueur que les parties principales 12a, 12b, et une hauteur de l'ordre de quelques millimètres.

Grâce à ces parties terminales, le flux d'air entraîné par les pales est canalisé par celles-ci en direction des ouies de sortie d'air 02, 04 respectivement, et comme le montrent les boucles F5, F6 sur la figure 1, la tendance qu'a l'air de ressortir par les ouies d'entrée est contrée par les parties terminales, les pertes de flux d'air de refroidissement étant ainsi minimisées.

Plus précisément, on minimise les décollements d'air à partir des pales lorsque des différences de pression entre l'entrée et la sortie sont rencontrées, comme c'est fréquemment le cas lorsque des obstacles existent au niveau de l'entrée ou de la sortie.

La ventilation étant plus efficace, les échauffements existant en particulier dans les alternateurs à vitesse de rotation élevée sont diminués.

## Revendications

1. Alternateur, du type comprenant un carter formant stator (S), un rotor (R) monté sur un arbre (A) tournant dans le carter, au moins un ventilateur (V1, V2) monté sur le rotor à l'intérieur du carter, tournant avec ledit rotor et comportant une pluralité de pales (12; 22) de profil transversal généralement parallèle à l'axe de rotation du ventilateur, ainsi qu'une pluralité d'ouies de ventilation (O1-O4), comprenant des ouies (O1; O3) d'entrée axiale d'air et des ouies (O2; O4) de sortie radiale d'air, alternateur caractérisé en ce que lesdites pales (12, 22) présentent chacune en outre une partie terminale (12b, 22b) dirigée vers l'intérieur pour ainsi présenter en conjonction avec le flanc du rotor un profil transversal en forme générale de "U".

2. Alternateur selon la revendication 1, caractérisé en ce que lesdites parties terminales (12b; 22b) sont orientées à environ 90° par rapport aux pales (12a; 22a).

3. Alternateur selon l'une des revendications 1 et 2, caractérisé en ce que chaque pale (12; 22) présente un profil longitudinal droit.

4. Alternateur selon l'une des revendications 1 à 3, caractérisé en ce que le ou chaque ventilateur muni de ses parties terminales est réalisé par découpage et pliage de tôle, le profil transversal en forme générale de "U" de chaque pale étant défini en conjonction avec un flasque (10; 20) du ventilateur.

## Patentansprüche

1. Wechselstromgenerator, umfassend ein als Ständer dienendes Gehäuse (S), einen auf einer im Gehäuse rotierenden Welle (A) gelagerten Läufer (R), wenigstens einen auf dem Läufer im Innern des Gehäuses gelagerten Lüfter (V1, V2), der sich zusammen mit dem besagten Läufer dreht und eine Mehrzahl von Flügeln (12; 22) mit einem zur Drehachse des Lüfters allgemein parallelen Querprofil sowie eine Mehrzahl von Lüftungsschlitzen (O1-O4) umfaßt, mit axialen Lufteintrittsschlitzen (O1; O3) und radialen Luftaustrittsschlitzen (O2; O4), **dadurch gekennzeichnet**, daß die besagten Flügel (12, 22) jeweils außerdem einen nach innen gerichteten Endteil (12b, 22b) aufweisen, um so in Verbindung mit der Flanke des Läufers ein allgemein "U"-förmiges Querprofil aufzuweisen.

2. Wechselstromgenerator nach Anspruch 1, **dadurch gekennzeichnet**, daß die besagten Endteile (12b; 22b) in einem Winkel von etwa 90° im Verhältnis zu den Flügeln (12a; 22a) ausgerichtet sind.

3. Wechselstromgenerator nach einem der Ansprüche 1 und 2, **dadurch gekennzeichnet,** daß jeder Flügel (12; 22) ein gerades Längsprofil aufweist.

4. Wechselstromgenerator nach einem der Ansprüche 1 bis 3, **dadurch gekennzeichnet,** daß der bzw. jeder mit seinen Endteilen versehene Lüfter durch Stanzen und Biegen aus Blech ausgeführt ist, wobei das allgemein "U"-förmige Querprofil jedes Flügels in Verbindung mit einem Flansch (10; 20) des Lüfters definiert ist.

## Claims

1. An alternator, of the type comprising a casing defining a stator (S), a rotor (R) mounted on a shaft (A) rotatable in the casing, and at least one fan (V1, V2) mounted on the rotor within the casing, for rotation with the said rotor and comprising a plurality of blades (12; 22) having a transverse profile generally parallel to the axis of rotation of the fan, together with a plurality of ventilation ports (O1 - O4) comprising axial air inlet ports (O1; O3) and radial air outlet ports (O2; O4), the alternator being characterised in that each of the said blades (12, 22) further has a terminal portion (12b, 22b) directed inwardly whereby to define, in conjunction with the flank of the rotor, a generally U-shaped transverse profile.

2. An alternator according to Claim 1, characterised in that the said terminal portions (12b; 22b) are orientated at about 90° with respect to the blades (12a; 22a).

3. An alternator according to Claim 1 or Claim 2, characterised in that each blade (12; 22) has a straight longitudinal profile.

4. An alternator according to one of Claims 1 to 3, characterised in that the or each fan, with its terminal portions, is formed by pressing out and bending from sheet metal, the generally U-shaped transverse profile of each blade being defined in conjunction with a radial plate portion (10; 20) of the fan.
